# FASCICULE DE BREVET EUROPEEN

(11) **EP 2 497 945 B1**
(45) Date de publication et mention de la délivrance du brevet: **10.08.2016**
(21) Numéro de dépôt: 12305281.3
(22) Date de dépôt: 09.03.2012
(51) Int. Cl.: F03D 80/00, B29C 70/86, F01D 5/28, B29L 31/08, F03D 1/06

(54) **Renfort mécanique pour piéce en matériau composite, notamment pour une pale d'éolienne de grandes dimensions**
Mechanische Verstärkung eines Verbundmaterialbauteils, insbesondere für Flügel einer Windkraftanlage großer Abmessungen
Mechanical reinforcement for a part made of a composite material, in particular for a large wind-turbine blade

(30) Priorité: 11.03.2011 FR 1152013
(43) Date de publication de la demande: 12.09.2012
(73) Titulaire: Epsilon Composite, 33340 Gaillan (FR)
(72) Inventeur: Lull, Stéphane, 33990 HOURTIN (FR); Ferrer, Denis, 33180 VERTHEUIL (FR); Portoles, José, 33340 QUEYRAC (FR)
(74) Mandataire: Novagraaf Technologies

(56) Documents cités:
- EP-A2- 2 341 239
- WO-A1-2006/002621
- WO-A1-2006/082479
- WO-A1-2010/065928
- GB-A- 2 451 192
- US-A1- 2009 220 747

## Description

La présente invention concerne un renfort mécanique pour une pièce en matériau composite, notamment une pale d'éolienne de grandes dimensions.

On connaît les aérogénérateurs qui sont constitués d'un mât fixé au sol pour les champs terrestres ou sur une base en mer pour les champs offshore, ce mât ou pylône supportant un générateur électrique dont l'arbre porte des pales ayant un profil adapté pour être entraînées par le vent.

Les éoliennes sont un moyen de production d'énergie électrique propre et indéfiniment renouvelable.

Néanmoins, bien qu'avantageux sur le plan écologique, ces moyens de production d'énergie électrique présentent un inconvénient essentiel lié à leur rendement limité.

En effet, les dimensions sont limitées par les contraintes mécaniques subies par les pales et par la résistance mécanique des pales, la plage de fonctionnement liée aux vitesses du vent étant ainsi déduite de ces paramètres et donc relativement limitée.

On constate dès lors que, soit les dimensions des pales sont réduites et les vitesses acceptables sont assez élevées, soit les dimensions des pales sont importantes et les plages de fonctionnement sont réduites. Dans ce dernier cas, une vitesse de vent trop faible n'entraîne pas les pales du fait de l'inertie et une vitesse de vent trop forte induit des efforts supérieurs aux limites de résistance mécanique acceptables par les pales.

La recherche se porte donc sur des moyens permettant d'augmenter tous ces paramètres intrinsèquement liés qui passent donc tous par une augmentation de la résistance mécanique des pales.

Le problème est que l'augmentation de la résistance par simple augmentation des épaisseurs de paroi des pales en matériau composite alourdit aussi la pale et augmente l'inertie, ce qui n'est pas satisfaisant en plus du coût qui se trouve augmenté et du fait qu'il y aura plus de matière à recycler en fin de vie. Parallèlement, cela engendre la nécessité de renforcer le mât ou pylône qui supporte le générateur.

De plus, le renforcement mécanique recherché de la pale se situe surtout au niveau de la résistance à la flexion, donc l'augmentation de l'épaisseur de la paroi de la pale ne répond qu'imparfaitement.

Plusieurs architectures ont été proposées, comme par exemple celles décrites dans les demandes WO 2010 065 928, GB 2 451 192, WO 2006 082 479, WO 2006 002 621 ou US 2009 220 747.

Le choix des matériaux s'est porté sur du carbone ou sur d'autres fibres de la famille des aramides du fait de leur forte résistance mécanique intrinsèque mais cela ne suffit pas à atteindre le résultat recherché.

De ce fait, il a été imaginé de recourir à la mise en place de longerons directement intégrés à la fabrication des demi pales.

Ces longerons sont réalisés à partir de pièces monolithiques intégrées ou avec des tissus pré imprégnés, rapportés en cours de fabrication.

Les contraintes en compression obtenues respectivement avec des tissus carbone et avec des tissus pré imprégnés se situent dans des plages de 600 à 800 MPa et 900 à 1100 MPa.

On sait que les profilés pultrudés permettent d'atteindre des résistances beaucoup plus importantes de l'ordre de 1600 MPa.

Par contre, les profilés pultrudés sont de dimensions constantes en sortie de fabrication et de section également constante.

Le but de la présente invention est de recourir à de tels profilés pultrudés agissant comme renforts, notamment dans des pales d'éoliennes et qui facilite la fabrication industrielle de l'élément.

Ces profilés ont l'avantage de pouvoir être produits de façon particulièrement industrielle avec des qualités certaines de fabrication et donc des performances homogènes contrôlées et contrôlables, reproductibles.

Le renfort selon l'invention est maintenant décrit en détail suivant deux modes de réalisation permettant de généraliser la portée de l'invention et d'en montrer toutes les potentialités.

L'invention est maintenant décrite en détail en se reportant aux dessins suivants sur lesquels les figures représentent :
- Figure 1 : une vue schématique d'une pale d'éolienne,
- Figure 2 : une vue d'une pale d'éolienne avec un renfort selon l'invention dont l'emplacement en intrados et en extrados est schématisé, et en loupe un détail d'une coupe transversale,
- Figure 3 : une vue en perspective d'un renfort selon l'invention prêt à être intégré lors de la fabrication d'une pale d'éolienne, et
- Figure 4 : une vue avant et après usinage permettant de diminuer les contraintes d'extrémité.

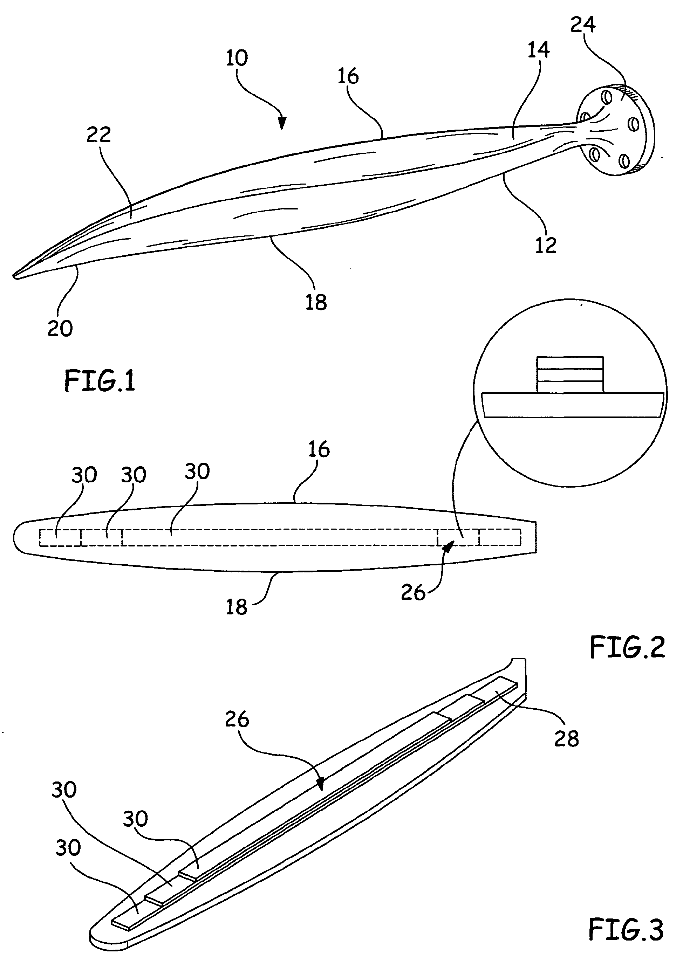

L'invention est maintenant décrite en regard des figures 1, 2 ou 3 indifféremment.

Sur la figure 1, on a représenté de façon schématique, une pale 10 d'un rotor d'éolienne, lui-même non représenté, qui en comporte généralement trois.

Ce type de pale est réalisé par moulage en deux demi pales 12,14, inférieure et supérieure qui sont ensuite assemblées suivant un plan de joint sensiblement Le profil d'une pale d'éolienne est du type alaire comme une aile d'avion avec un bord 16 d'attaque, un bord 18 de fuite, un intrados 20 et un extrados 22.

La pale 10 comprend un pied de pale 24 destiné à être fixé par une bride sur ledit rotor, généralement par boulonnage.

Le corps de chaque demi-pale est fabriqué de façon connue par drapage de mats de fibres ou des tissus noyés dans une matrice en résine. Les parties fortement sollicitées subissent une augmentation de l'épaisseur de matière.

En effet la forme complexe et les dimensions rendent difficile le recours à des matériaux alvéolaires type nid d'abeille qui auraient l'avantage d'une forte résistance et d'une grande légèreté.

La présente invention propose d'adjoindre lors de la fabrication par exemple, où a posteriori, au moins un renfort 26 faisant office de longeron, de chaque côté de la pale donc au sein de chaque demi-pale, ainsi que représenté sur la figure 2, sensiblement suivant l'axe longitudinal.

Un tel renfort doit présenter un profil adapté aux efforts subis par la pale et doit donc présenter une épaisseur variable.

On sait par ailleurs qu'il existe une technologie de fabrication de pièces en matériau composite à très hautes performances, généralement réalisées à partir de fibres de carbone aptes à développer des résistances à la compression au-delà de 1600 MPa : c'est la pultrusion.

Cette technologie permet de réaliser des pièces avec une section constante, de profil simple, notamment à section ronde, carrée, rectangulaire.

La qualité de réalisation, la reproductibilité et les performances sont exceptionnelles.

Ainsi, il est possible de réaliser en continu un profilé 28 pultrudé, de section rectangulaire. Pour donner un exemple, un tel profilé présente une largeur très supérieure à son épaisseur, 500 mm de large pour une épaisseur de 1 à 2 mm.

Ce profilé est débité par découpe mécanique à la longueur requise pour constituer des pièces 30, en l'occurrence des pièces 30 en forme de lames.

Il existe alors deux options, soit la fabrication préalable du renfort 26 selon l'invention soit la fabrication du renfort 26 in situ, sur le lieu de fabrication de la pale.

Dans les deux cas, la succession des étapes de réalisation est identique. En effet, il convient de superposer au moins deux pièces 30 en forme de lames ainsi réalisées et de les solidariser par collage de façon à obtenir une structure du type lamellé-collé formant le renfort 26.

Avantageusement, la longueur des lames est variable, ce qui permet d'ajuster l'épaisseur du renfort en fonction des zones qui requièrent une augmentation des propriétés de résistance mécanique et d'obtenir la progressivité recherchée.

L'épaisseur, toujours dans l'exemple donné de façon non limitative, peut générer une épaisseur de 40 à 50mm dans la partie la plus renforcée, résultant de la superposition de plusieurs dizaines de lames.

On maîtrise ainsi notamment la résistance à la flexion de la pale d'éolienne et le profil de répartition de cette résistance.

De plus, les efforts sont différents sur l'intrados et sur l'extrados, si bien que les renforts correspondants sont également différents.

Le poids de la pale finale est diminué du fait de l'intégration de ce renfort à haut module selon l'invention, conduisant aussi à des performances améliorées ainsi qu'à des plages de travail de plus grande amplitude.

On note aussi que le renfort selon la présente invention est constitué de lames qui sont déformables unitairement, sans effort important. Ceci autorise une conformation de chaque lame pour suivre le profil curviligne des pales. Une fois conformées et liées entre elles par collage notamment, le renfort obtenu est donc conformé et d'une grande raideur, variable le long de la pale.

On constate que le profilé de très faible épaisseur peut être livré sur bobine, ce qui facilite grandement la fabrication industrielle de la pale. En effet, les profilés pultrudés sont bobinés et livrés en grande longueur qu'il suffit de découper pour réaliser les assemblages par superposition de plusieurs dizaines de lames.

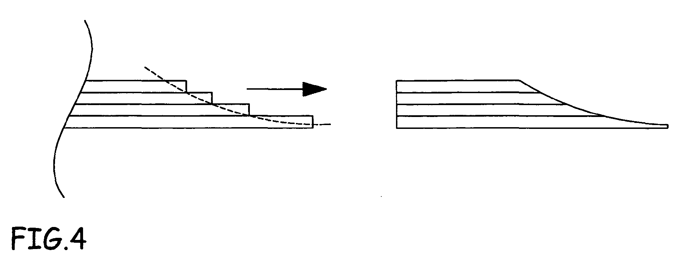

La figure 4 représente un perfectionnement de la réalisation de telles pièces par superposition de lames. Les extrémités se retrouvent avec une superposition des épaisseurs décalées formant des marches d'escalier. Afin de lutter contre la concentration de contraintes et pour limiter les risques de délaminage, il est possible de procéder à un usinage en courbe, comme montré sur la droite de la figure 4, supprimant ainsi les escaliers.

Bien entendu, en variante, la section du profilé obtenu par pultrusion pourrait être triangulaire avec des joncs triangulaires juxtaposés latéralement sans sortir du cadre de l'invention.

Ces joncs seraient alors introduits directement ou placés en sandwich entre deux peaux de lames pultrudées de section rectangulaire par exemple pour former un renfort adapté.

Les lames sont à section rectangulaire mais la section transversale peut aussi être courbée pour tenir compte de la forme de la pale dans la zone où est disposé ledit renfort.

De plus, ainsi que le permet la pultrusion, les fibres sont disposées de façon adaptées avec notamment des fibres unidirectionnelles pour augmenter la rigidité longitudinale et des fibres orientées pour assurer la reprise des efforts de vrillage et ou de flexion composée.

La nature des fibres utilisées est plutôt technique à haute performance, en carbone mais le renfort selon la présente invention trouve une application avec des fibres de verre également.

De même, dans l'exemple retenu, il est prévu des lames de largeur identique mais il est aussi possible de prévoir une superposition de lames de longueur et de largeur dégressives par exemple et/ou d'épaisseurs variables.

Egalement si la largeur nécessaire est supérieure à la largeur extrudable, il est possible de juxtaposer latéralement plusieurs ensembles avec chacun une superposition de lames.

## Revendications

1. Renfort (26) à base de fibres et de résine pour élément (10) en matériau composite, notamment une pale d'éolienne, ledit renfort (26) étant obtenu par superposition d'au moins deux pièces (30) obtenues par pultrusion, de dimensions différentes, avec une faible épaisseur par rapport à la largeur et de grande longueur, **caractérisé en ce que** chacune desdites au moins deux pièces (30) est courbée pour être mises en forme au profil de l'élément (10) qui les reçoit et adaptées au profil dudit élément, ces au moins deux pièces (30) superposées étant liées entre elles de façon à obtenir un renfort composé desdites pièces

2. Renfort pour élément en matériau composite selon l'une quelconque des revendications précédentes, **caractérisé en ce que** chacune desdites au moins deux pièces (30) comprend des fibres unidirectionnelles.

3. Renfort pour élément en matériau composite selon l'une quelconque des revendications précédentes, **caractérisé en ce qu'**il constitue le longeron d'une pale d'éolienne.

4. Renfort pour élément en matériau composite selon l'une quelconque des revendications précédentes, **caractérisé en ce que** les fibres sont des fibres de carbone.

5. Renfort pour élément en matériau composite selon l'une quelconque des revendications précédentes, **caractérisé en ce que** les extrémités sont usinées selon un profil courbe de façon à limiter les contraintes.

6. Pale d'éolienne (10) comprenant un renfort (26) selon l'une quelconque des revendications précédentes, **caractérisée en ce que** le renfort (26) est disposé suivant son axe longitudinal pour résister à la flexion.

## Patentansprüche

1. Aussteifung (26) basierend auf Fasern und Harz für ein Element (10) aus Verbundmaterial, vor allem einen Windradflügel, wobei die besagte Aussteifung (26) durch die Überlagerung von zumindest zwei Teilen (30) mit unterschiedlichen Abmessungen erhalten wird, die durch Pultrusion erhalten werden, mit einer geringen Dicke im Verhältnis zur Breite und einer großen Länge, **dadurch gekennzeichnet, dass** jedes der besagten zumindest zwei Teile (30) gekrümmt ist, um entsprechend dem Profil des Elements (10), das diese aufnimmt, ausgeformt zu werden, und um dem Profil des besagten Elements angepasst zu werden, wobei diese zumindest zwei überlagerten Teile (30) miteinander verbunden sind, um eine Aussteifung zu erhalten, die sich aus den besagten Teilen zusammensetzt.

2. Aussteifung für ein Element aus Verbundmaterial nach einem der vorherigen Ansprüche, **dadurch gekennzeichnet, dass** jedes der besagten zumindest zwei Teile (30) unidirektional angeordnete Fasern umfasst.

3. Aussteifung für ein Element aus Verbundmaterial nach einem der vorherigen Ansprüche, **dadurch gekennzeichnet, dass** sie den Längsträger eines Windradflügels bildet.

4. Aussteifung für ein Element aus Verbundmaterial nach einem der vorherigen Ansprüche, **dadurch gekennzeichnet, dass** die Fasern Karbonfasern sind.

5. Aussteifung für ein Element aus Verbundmaterial nach einem der vorherigen Ansprüche, **dadurch gekennzeichnet, dass** die Enden gemäß einem gekrümmten Profil bearbeitet werden, um die Beanspruchungen einzuschränken.

6. Windradflügel (10), eine Aussteifung (26) nach einem der vorherigen Ansprüche umfassend, **dadurch gekennzeichnet, dass** die Aussteifung (26) entlang seiner Längsachse angeordnet ist, um der Biegung standzuhalten.

## Claims

1. Reinforcement (26) based on fibers and resin for element (10) made of composite material, in particular a wind turbine blade, said reinforcement (26) is obtained by superposition of at least two parts (30) obtained by pultrusion, having different dimensions, which has a thickness lower to its width and is of great length, **characterized in that** each of said two parts (30) is curved to take into account the shape of the profile of the element (10) that receives them and adapted to the profile of said element, these two superposed parts (30) are connected to one another in such a way as to make a reinforcement.

2. Reinforcement for element made of composite material according to any of the preceding claims, **characterized in that** each of said at least two parts (30) comprises unidirectional fibers.

3. Reinforcement for element made of composite material according to any of the preceding claims, **characterized in that** it constitutes the spar of a wind turbine blade.

4. Reinforcement for element made of composite material according to any of the preceding claims, **characterized in that** the fibers are carbon fibers.

5. Reinforcement for element made of composite material according to any of the preceding claims, **characterized in that** the ends are machined along a curved profile in such a way as to limit stresses.

6. Wind turbine blade (10) comprising a reinforcement (26) according to any of the preceding claims, **characterized in that** the reinforcement (26) is arranged along its longitudinal axis for withstanding bending.
